# EUROPÄISCHE PATENTSCHRIFT

(11) **EP 0 537 472 B1**
(45) Veröffentlichungstag und Bekanntmachung des Hinweises auf die Patenterteilung: **09.03.1994**
(21) Anmeldenummer: 92115334.2
(22) Anmeldetag: 05.09.1992
(51) Int. Cl.: B60M 1/30, E01B 9/60

(54) **Isolationsträger für Stromschienen**
Insulator support for conductor rails
Support d'isolation pour barres conductrices

(30) Priorität: 16.10.1991 DE 9112844 U
(43) Veröffentlichungstag der Anmeldung: 21.04.1993
(73) Patentinhaber: REHAU AG + Co, 95111 Rehau (DE)
(72) Erfinder: Strickstrock, Theo, c/o Rehau AG + Co, W-8673 Rehau (DE); Militzer, Ulrich, W-8673 Rehau (DE)

(56) Entgegenhaltungen:
- DE-A- 1 615 545
- US-A- 1 632 662

## Beschreibung

Die Neuerung betrifft einen Isolationsträger für Stromschienen in Verkehrssystemen mit einem tragenden Fußteil und einem an dessen oberen freien Ende angeordneten Aufnahmebereich für den Fuß der Stromschiene.

Durch die DE-AS 1 615 545 ist ein Isolationsträger bekannt, der aus einem Stromschienenbock besteht, an dem die Stromschiene mittels einer an einem tragenden Isolator angeordneten Klaue befestigt ist. Der tragende Isolator ist dabei ein glasfaserverstärktes Pressteil, das an seinem einen Ende mit dem Schwellenbock und an seinem anderen Ende mit der die Stromschiene tragenden Klaue verbunden ist.

Der Nachteil dieses bekannten Aufbaus ist darin zu sehen, daß hier der gesamte Isolationsträger aus verschiedenen Teilstücken, die aus unterschiedlichen Materialien gebildet sein können, gestaltet ist. Die dabei verwendeten Schraubverbindungen und tragenden Metallteile sind geeignet, die Bildung von Kriechströmen zu begünstigen. Darüber hinaus ist der Montageaufwand erheblich.

Aus dem DE-GM 73 37 642 ist ein weiterer Isolationsträger für Stromschienen bekannt, bei dem das Fußteil und der Tragarm einstückig ausgebildet sind. Am freien Ende des Tragarmes ist ein Aufnahmeelement angeformt, welches an seiner Oberfläche federartige Erhöhungen besitzt, die mit korrespondierenden Nuten an der Basis einer Befestigungsklammer Zusammenwirken. Auch bei dieser Konstruktion hat sich als nachteilig herausgestellt, daß die Befestigungsklammer zu ihrer Sicherung über eine Schraubverbindung an dem Aufnahmeelement zusätzlich festgelegt ein muß. Dadurch ist wiederum der Montageaufwand erhöht und die Kriechstromsicherheit in Frage gestellt.

Aus dem GE-GM 88 06 387 ist schließlich ein Isolationsträger für Stromschienen bekannt, bei dem die Befestigungsklammer für die Stromschiene ohne metallische Befestigungselemente, wie Schrauben und dergleichen im Aufnahmebereich des Tragarms festgelegt ist.

Dazu ist der Tragarm zweistückig aus einem fußteilseitigen Formstück und einem Kopfbereich aufgebaut, wobei das fußteilseitige Formstück mit dem freien Ende des Fußteils unlösbar verbunden ist, während der Kopfbereich über eine Gleitpassung mit dem Formstück verbunden und über ein eine Presspassung bewirkendes Klemmelement in diesem lösbar festgelegt ist. Das fußteilseitige Formstück besitzt eine Grundplatte zur Untergreifung sowie eine Basisplatte zur Übergreifung des freien Endes des Fußteils sowie eine durch Abstandsstege gehaltene Deckplatte. Das Formstück hat in seiner Grundplatte und seiner Basisplatte eine zentrale Öffnung, welche nach Erreichen des Endsitzes am freien Ende des Fußteils mit einer entsprechenden Öffnung am freien Ende des Fußteils fluchtet. In die gemeinsame Öffnung ist ein Paßstift eingelassen, mit welchem das fußteilseitige Formstück mit dem oberen freien Ende des Fußteils verbunden ist.

Nach der Verbindung des fußteilseitigen Formstücks mit dem oberen freien Ende des Fußteils wird die Stromschiene in die Haltenase des Formstücks eingesetzt. Danach wird der Kopfbereich mit seiner querverlaufenden Haltenase auf die Stromschiene aufgesetzt, wobei der Kopfbereich über eine Gleitpassung mit dem Formstück verbunden ist. Nach dem endgültigen Aufschieben des Kopfbereichs wird dieser durch ein Klemmelement lösbar mit dem Formstück verbunden, wobei dieses Klemmelement eine Presspassung des Kopfbereichs am Formstück bewirkt.

Dieser bekannte Aufbau läßt zwar einen Zusammenbau des Isolationsträgers ohne Verwendung metallischer Halteelemente und damit ohne Gefahr einer Kriechstrombildung zu, was durch die ausschließliche Verwendung glasfaserverstärkter Einzelteile bewirkt wird. Der Montageaufwand ist allerdings nach wie vor erheblich, was zwangsweise als verbleibender Nachteil anzusehen ist.

Hier setzt die Neuerung ein, die es sich zur Aufgabe gestellt hat, einen Isolationsträger für von oben bestrichene Stromschienen anzugeben, bei dem der Montageaufwand auf ein Minimum zurückgeführt wird. Neuerungsgemäß wird dazu vorgeschlagen, daß der tragende Fußteil aus einem hohlen Fußunterteil und einem darin teleskopartig verstellbar gelagerten Fußoberteil besteht, und daß am freien Ende des Fußoberteils klauenartige Aufnahmeelemente angeordnet sind, welche aus einer geöffneten Beladestellung durch Auflagerdruck der eingesetzten Stromschiene in eine den Fuß der Stromschiene umspannende Haltestellung gelangen.

Hierbei hat es sich als vorteilhaft erwiesen, daß aus Wandbereichen des Fußunterteils gegenüberliegend in den hohlen Innenraum leistenartige Vorsprünge ragen, welche in längsverlaufend an den zugeordneten Außenwandbereichen des Fußoberteils eingebrachte Aufnahmenuten eingreifen. Das Fußoberteil selbst ist durch vorgefertigte Abstandelemente, welche nutenförmige Einschnitte tragen, die den Aufnahmenuten der Außenwandbereiche des Fußoberteils entsprechen, in seiner Verschiebehöhe im Fußunterteil einstellbar.

In einer ersten Ausführungsform besteht das freie Ende des Fußoberteils aus konvergierend zueinander geneigten Wandbereichen, welche im Bereich ihres Zusammentreffens von einer Mittelwand des Fußoberteils zusätzlich abgestützt sind. Diese konvergierend zueinander geneigten Wandbereiche weisen mittig durchgehende, schlüssellochförmige Öffnungen für den Eingriff pilzförmiger Vorsprünge an den klauenartigen Aufnahmeelementen auf. Die klauenartigen Aufnahmeelemente selbst sind das freie Ende des Fußoberteils übergreifende Formkörper, welche an ihrer flächigen Unterseite Führungsnuten aufweisen, in die über die geneigten Wandbereiche des freien Endes des Fußoberteils hervorstehende, federartige Führungsleisten eingreifen. Schließlich ist noch der größere Querschnitt der schlüssellochförmigen Öffnungen an den oberen Rändern der konvergierend zueinander geneigten Wandbereiche ausgeformt.

In einer anderen Ausführungsform sind in das freie Ende des Fußoberteils gegenüberliegend nach oben offene, halbkreisförmige Aufnahmen eingelassen, welche zum inneren Hohlraum des Fußoberteils gerichtete, schlüssellochförmige Öffnungen für den Eingriff pilzförmiger Vorsprünge an den klauenartigen Aufnahmeelementen aufweisen. Diese klauenartigen Aufnahmeelemente sind zweckmäßigerweise walzenförmige Haltekörper. Der größere Querschnitt der schlüsselförmigen Öffnungen ist in der Stirnwand des Fußoberteils in die halbkreisförmigen Aufnahmen verlaufend eingelassen.

Der Vorteil des neuerungsgemäßen Isolationsträgers ist darin zu sehen, daß neben der optimalen Kriechstromfestigkeit eine montagefreundliche Lösung gefunden wurde. In die schlüssellochartigen Öffnungen in den zwei konvergierend zueinander geneigten Wandbereichen bzw. in den nach oben offenen, halbkreisförmigen Aufnahmen werden die pilzförmigen Vorsprünge an den klauenartigen Aufnahmeelementen eingesetzt. Dabei durchgreift der Kopfbereich der pilzförmigen Vorsprünge den durchmessergrösseren Bereich der schlüssellochförmigen Öffnungen und aufgrund der konvergierend zueinander geneigten Wandbereiche gleitet der Führungsbereich der pilzförmigen Vorsprünge in die durchmessergeringere Schlitzöffnung der beiden gegenüberliegenden klauenartige Aufnahmeelemente und können so im Rahmen der Öffnungslänge der schlüssellochförmigen Öffnungen auf den beiden konvergierend zueinander geneigten Wandbereichen des freien Endes des Fußoberteils aufeinander zu- bzw. voneinander weggleitend bewegt werden. Eine Entschlüsselung ist im Bereich der durchmessergeringeren Schlitzöffnung nicht möglich, da der Kopfbereich der pilzförmigen Vorsprünge die durchmessergeringere Schlitzöffnung hintergreift. Im Rahmen der gegebenen Bewegungsmöglichkeit können die klauenartigen Aufnahmeelemente auf den beiden konvergierend zueinander geneigten Wandbereichen so weit nach außen verschoben werden, daß der Fußbereich der Stromschiene in die gebildete Öffnung zwischen beiden Klauen eingesetzt werden kann.

In der Regel reicht das Eigengewicht der Stromschiene aus, die klauenartigen Aufnahmeelemente auf den Oberflächen der beiden konvergierend zueinander geneigten Wandbereiche gegeneinander zu verschieben. Dabei hintergreifen dann die Klauen der klauenartigen Aufnahmeelemente die Fußbereiche der Stromschiene und bewirken auf diese Weise eine feste Halterung der Stromschiene am Isolationsträger.

Eine Entnahme der Stromschiene aus dieser Halterung kann leicht auf umgekehrten Kraftwege erfolgen. Dabei wird die Stromschiene selbst leicht angehoben bis zu einem Punkt, an dem die klauenartigen Aufnahmeelemente voneinander weg auf den konvergierend zueinander geneigten Wandbereichen bewegt werden können. Dadurch erfolgt eine Entriegelung des Stromschienenfußes, der mit der Stromschiene dann einfach aus den völlig geöffneten klauenartigen Aufnahmeelementen herausgenommen werden kann.

Der nahezu gleiche Bewegungsablauf ergibt sich bei der zweiten Variante der Neuerung, nämlich bei der Verwendung des Fußoberteils mit gegenüberliegend nach oben offenen, halbkreisförmigen Aufnahmen. In diese halbkreisförmigen Aufnahmen sind ebenfalls die schlüssellochförmigen Öffnungen für den Eingriff der pilzförmigen Vorsprünge an den klauenartigen Aufnahmeelementen eingebracht. Die klauenartigen Aufnahmeelemente sind in diesem Fall walzenförmige Haltekörper. Diese walzenförmigen Haltekörper sind drehbeweglich in den nach oben offenen, halbkreisförmigen Aufnahmen eingelassen. Zur Öffnung dieser Halterung werden die walzenförmigen Haltekörper im Bereich der Bewegungsmöglichkeiten durch die schlüssellochförmigen Öffnungen nach außen verschwenkt. Dadurch wird mittels der klauenartigen Aufnahmeelemente die Einsatzöffnung für den Fußbereich der Stromschiene geschaffen. Wird nun die Stromschiene mit ihrem Gewicht in diese Einsatzöffnung eingebracht, drückt die Stromschiene selbst die ihr entgegengerichteten Bereiche der walzenförmigen Haltekörper nach unten, wodurch diese walzenförmigen Haltekörper in den nach oben offenen, halbkreisförmigen Aufnahmen verdreht werden.

Bei diesem Bewegungsvorgang hintergreifen die am äußeren Umfang der walzenförmigen Haltekörper angeformten pilzförmigen Vorsprünge mit ihren Kopfbereichen den äußeren Umfang der schlüssellochförmigen Öffnungen und sorgen auf diese Weise für eine feste Verriegelung der Stromschiene in ihrem Endsitz.

Die Entriegelung der Stromschiene ist durch Kraftumkehr genauso leicht zu bewerkstelligen wie bei der zuvor geschilderten Variante mit den konvergierend zueinander geneigten Wandbereichen.

Das Fußoberteil ist zusätzlich teleskopartig in dem hohlen Fußunterteil verstellbar, wobei durch die Höhenanpassung beim Aufbau der Stromführung entstandene Toleranzen ausgeglichen werden können.

In der Zeichnung sind Ausführungsbeispiele des neuerungsgemäßen Isolationsträgers schematisch dargestellt; es zeigt:
Fig. 1 einen Teilschnitt durch Fußunterteil und Fußoberteil im Bereich der Teleskopbewegung;
Fig. 2 einen Schnitt durch die Stromschienenhalterung mit zwei konvergierend zueinander geneigten Wandbereichen in geschlossener Stellung.
Fig. 2a einen Schnitt durch die Stromschienenhalterung gemäß Fig.2 in geöffneter Stellung.
Fig. 3 einen Schnitt durch die Stromschienenhalterung mit walzenförmigen Haltekörpern.

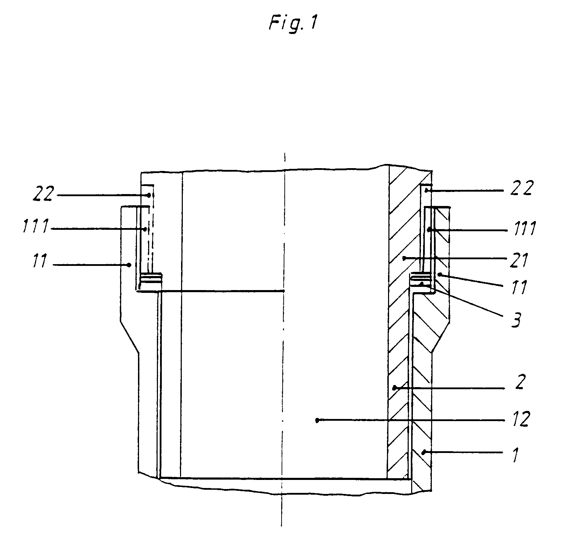

In Fig. 1 zeigt der Teilschnitt das Fußunterteil 1 und das Fußoberteil 2 im Bereich der teleskopischen Bewegungsmöglichkeit. Das Fußunterteil 1 ist ohne den Ständerbereich dargestellt, der dem des Standes der Technik entspricht. Am oberen freien Ende des Fußunterteils 1 ragen aus den leicht nach außen abgekröpften Wandbereichen 11 gegenüberliegend in den hohlen Innenraum 12 hinein verlaufend leistenartige Vorsprünge 111.

Diese leistenartigen Vorsprünge 111 greifen in längsverlaufend an den zugeordneten Außenwandbereichen 21 des Fußoberteils 2 eingebrachte Aufnahmenuten 22 ein. Im Bereich dieser Nutenverbindung ist das Fußoberteil 2 durch vorgefertigte Abstandselemente 3 in seiner Verschiebehöhe im Fußunterteil 1 einstellbar. Diese Abstandselemente 3 können streifenförmige Unterlagen vorgegebener Dicke sein, die im Bereich der leistenartigen Vorsprünge 111 des Fußunterteils 1 entsprechende Ausnehmungen aufweisen können.

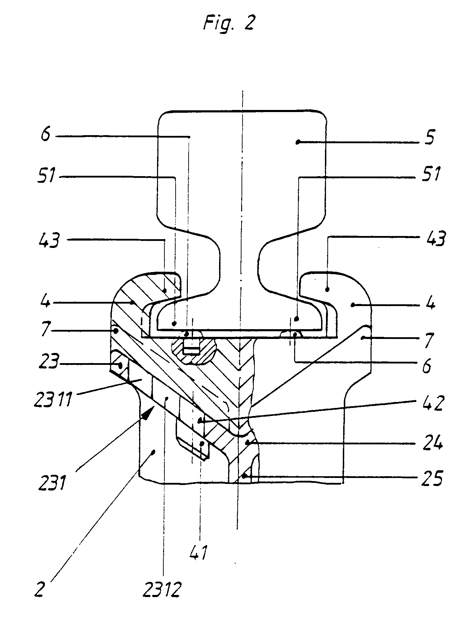

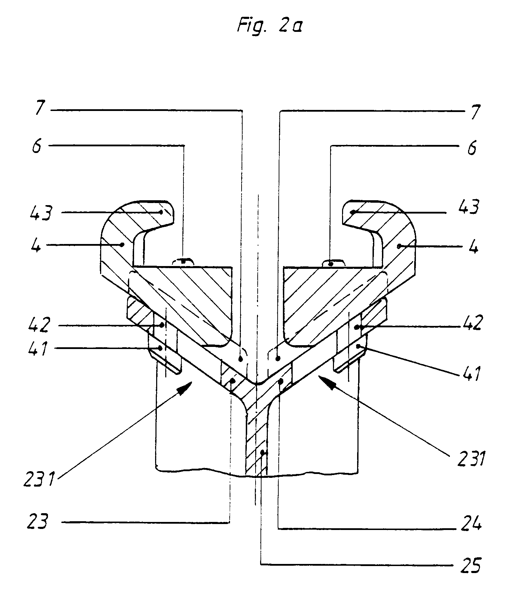

Fig. 2 zeigt den Schnitt durch die Stromschienenhalterung mit den zwei konvergierend zueinander geneigten Wandbereichen in geschlossener Stellung. Gezeigt ist am oberen freien Ende des Fußoberteils 2 in einem Teilschnitt der linke geneigte Wandbereich 23, während der konvergierend dazu geneigte Wandbereich 24 durch den gezeigten Teilschnitt nur leicht angeschnitten ist. Die konvergierend zueinander geneigten Wandbereiche 23, 24 sind im Bereich ihres Zusammentreffens von einer Mittelwand 25 des Fußoberteils 2 abgestützt. Der Wandbereich 23 ist genau im Bereich der schlüssellochförmigen Öffnung 231 geschnitten. Durch die schlüssellochförmige Öffnung greift der pilzförmige Vorsprung des klauenartigen Aufnahmeelementes 4. Der pilzförmige Vorsprung des klauenartigen Aufnahmeelementes 4 besteht aus dem durchmessergrößeren Kopfbereich 41 und dem durchmessergeringeren Führungsbereich 42. Der durchmessergrößere Kopfbereich 41 ist durch die größere Umfangsöffnung 2311 der schlüssellochförmigen Öffnung 231 eingesetzt und ist mit seinem Führungsbereich 42 die durchmessergeringere Schlitzöffnung 2312 durchgreifend dargestellt. Der Kopfbereich 41 des pilzförmigen Vorsprungs hintergreift die durchmessergeringere Schlitzöffnung 2312 der schlüssellochförmigen Öffnung 231.

In der in Fig. 2 dargestellten Haltestellung der klauenartigen Aufnahmeelemente 4 übergreifen die Klauen 43 die Haltebereiche 51 der Stromschiene 5. Die Haltebereiche 51 der Stromschiene 5 ruhen in der gezeigten Darstellung auf Gleitschienen 6, die in die klauenartigen Aufnahmeelemente 4 eingelassen sind.

Die klauenartigen Aufnahmeelemente 4 sind gegen seitliches Verschieben in wulstartigen Erhebungen 7 an den konvergierend zueinander geneigten Wandbereichen 23, 24 am freien Ende des Fußoberteils 2 geführt.

Durch das Gewicht der Stromschiene, die in der Regel aus Stahl besteht, haben sich in der gezeigten Darstellung die klauenartigen Aufnahmeelemente 4 aus der in Fig. 2a gezeigten Stellung auf den konvergierend zueinander geneigten Wandbereichen 23, 24 nach unten bewegt, so daß die Stromschiene 5 dadurch in ihrer Endposition arretiert ist. Durch die nach unten weisenden Schrägflächen der zueinander geneigten Wandbereiche 23, 24 ist eine Selbsthemmung und Selbsthalterung der Stromschiene 5 gewährleistet.

In Fig. 2a haben gleiche Teilelemente die gleichen Bezugszeichen erhalten wie in Fig. 2.

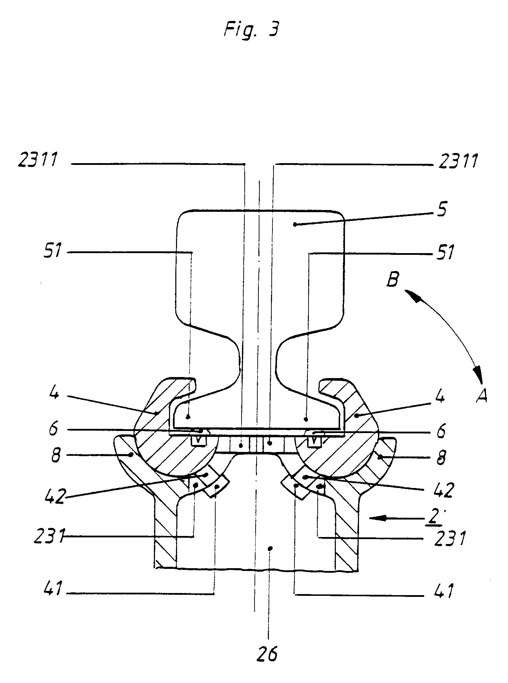

Fig. 3 zeigt einen Teilschnitt durch die Stromschienenhalterung mit walzenförmigen Haltekörpern. Hier sind am freien Ende des Fußoberteils 2 nach oben offene, halbkreisförmige Aufnahmen 8 eingelassen. Diese halbkreisförmigen Aufnahmen 8 besitzen zum inneren Hohlraum 26 des Fußoberteils 2 gerichtete, schlüssellochförmige Öffnungen 231 für den Eingriff pilzförmiger Vorsprünge, die ebenfalls aus Kopfbereich 41 und Führungsbereich 42 bestehen und an den klauenartigen Aufnahmeelementen 4 angeordnet sind. Die klauenartigen Aufnahmeelemente 4 sind in dieser Darstellung walzenförmige Haltekörper, die über die Länge der schlüssellochförmigen Öffnungen 231 in Pfeilrichtung verschwenkt werden können. Das Verschwenken der klauenartigen Aufnahmeelemente 4 in Pfeilrichtung A bedeutet das Öffnen der Haltekörper zur Aufnahme des Stromschienenfußes 51. Das Verschwenken der Haltekörper in Pfeilrichtung B bedeutet das Schließen und Festlegen der Stromschiene 5 innerhalb der Haltekörper. Die Arretierung der walzenförmigen Haltekörper - klauenartige Aufnahmeelemente 4 - in Fig. 3 erfolgt in gleicher Weise über die pilzförmigen Vorsprünge 41, 42 und die schlüssellochförmigen Öffnungen 231, 2311, 2312, wie zu Fig. 2 beschrieben.

## Patentansprüche

1. Isolationsträger für Stromschienen in Verkehrssystemen mit einem tragenden Fußteil und einem an dessen oberen freien Ende angeordneten Aufnahmebereich für den Fuß der Stromschiene, dadurch gekennzeichnet, daß der tragende Fußteil (1) aus einem hohlen Fußunterteil und einem darin teleskopartig verstellbar gelagerten Fußoberteil (2) besteht, und daß am freien Ende des Fußoberteils (2) klauenartige Aufnahmeelemente (4) angeordnet sind, welche aus einer geöffneten Beladestellung durch Auflagerdruck der eingesetzten Stromschiene (5) in eine den Fuß (51) der Stromschiene (5) umspannende Haltestellung gelangen.

2. Isolationsträger nach Anspruch 1, dadurch gekennzeichnet, daß aus Wandbereichen (11) des Fußunterteils (1) gegenüberliegend in den hohlen Innenraum (12) leistenartige Vorsprünge (111) ragen, welche in längsverlaufend an den zugeordneten Außenwandbereichen (21) des Fußoberteils (2) eingebrachte Aufnahmenuten eingreifen.

3. Isolationsträger nach Ansprüchen 1 und 2, dadurch gekennzeichnet, daß das Fußoberteil (2) durch vorgefertigte Abstandelemente (3) in seiner Verschiebehöhe im Fußunterteil (1) einstellbar ist.

4. Isolationsträger nach Anspruch 1, dadurch gekennzeichnet, daß das freie Ende des Fußoberteils (2) aus zwei konvergierend zueinander geneigten Wandbereichen (23, 24) besteht, welche im Bereich ihres Zusammentreffens von einer Mittelwand (25) des Fußoberteils (2) zusätzlich abgestützt sind, und welche jeweils mittig durchgehende, schlüssellochartige Öffnungen (231) für den Eingriff pilzförmiger Vorsprünge (41, 42) an den klauenartigen Aufnahmeelementen (4) aufweisen.

5. Isolationsträger nach Anspruch 4, dadurch gekennzeichnet, daß die klauenartigen Aufnahmeelemente (4) das freie Ende des Fußoberteils (2) übergreifende Formkörper sind, und daß diese Formkörper an ihrer flächigen Unterseite Führungsnuten aufweisen, in welche über die geneigten Wandbereiche (23, 24) des freien Endes des Fußoberteils (2) hervorstehende, federartige Führungsleisten (7) eingreifen.

6. Isolationsträger nach Anspruch 4, dadurch gekennzeichnet, daß der größere Querschnitt (2311) der schlüssellochförmigen Öffnungen (231) an den oberen Rändern der konvergierend zueinander geneigten Wandbereiche (23, 24) ausgeformt ist.

7. Isolationsträger nach Anspruch 1, dadurch gekennzeichnet, daß in das freie Ende des Fußoberteils (2) gegenüberliegend nach oben offene, halbkreisförmige Aufnahmen (8) eingelassen sind, welche zum inneren Hohlraum (26) des Fußoberteils (2) gerichtete, schlüssellochförmige Öffnungen (231) für den Eingriff pilzförmiger Vorsprünge (41, 42) an den klauenartigen Aufnahmeelementen (4) aufweisen.

8. Isolationsträger nach Anspruch 7, dadurch gekennzeichnet, daß die klauenartigen Aufnahmeelemente (4) walzenförmige Haltekörper sind.

9. Isolationsträger nach Anspruch 7, dadurch gekennzeichnet, daß der größere Querschnitt (2311) der schlüssellochförmigen Öffnungen (231) in der Stirnwand des Fußoberteils (2) in die halbkreisförmigen Aufnahmen (8) verlaufend eingelassen ist.

## Claims

1. Insulating bearer for conductor rails used in transport systems, having a load-bearing foot component with a recess arranged at the upper, open end to accommodate the base of the conductor rail, thereby characterized, in that the load-bearing foot component (1) consists of a concave lower component and an upper component (2) mounted therein in such a way that it can be adjusted telescopically, and in that, at the open end of the lower component (2), claw-type retaining elements (4) are arranged which, starting from an open receiving position, adopt a retaining position enclosing the foot (51) of the conductor rail (5) under the pressure brought to bear by the conductor rail (5) on insertion .

2. Insulating bearer in accordance with claim 1, thereby characterized, in that opposing rib-type projections (111) project from the walls (11) of the lower foot component (1) into the concave interior compartment (12), which engage longitudinal grooves in the related external walls (21) of the upper foot component (2).

3. Insulating bearer in accordance with claims 1 and 2, thereby characterized, in that the displacement height of the upper foot component (2) in the lower foot component (1) can be adjusted by means of prefabricated spacers (3).

4. Insulating bearer in accordance with claim 1, thereby characterized, in that the open end of the upper foot component (2) consists of two inclined, converging walls (23, 24), which are additionally supported at their point of convergence by a central wall (25) in the upper foot component (2), and which each incorporate centrally placed keyhole-type apertures (231) throughout their length for the purpose of engaging mushroom-type projections (41, 42) on the claw-type retaining elements (4).

5. Insulating bearer in accordance with claim 4, thereby characterized, in that the claw-type retaining elements (4) comprise moulded bodies which overlap the open end of the upper foot component (2), and in that the said moulded bodies incorporate guide grooves in their flat undersides which are engaged by spring-type guide ribs (7) which project beyond the inclined walls (23, 24) of the open end of the upper foot component (2).

6. Insulating bearer in accordance with claim 4, thereby characterized, in that the larger cross-section (2311) of the keyhole-type apertures (231) is formed at the upper edges of the converging, inclined walls (23, 24).

7. Insulating bearer in accordance with claim 1, thereby characterized, in that opposing, semicircular mounts (8), open at the top, are recessed into the open end of the upper foot component (2), which incorporate keyhole-type apertures (231) facing the inner cavity (26) of the upper foot component (2), for the purpose of engaging mushroom-type projections (41, 42) on the claw-type retaining elements (4).

8. Insulating bearer in accordance with claim 7, thereby characterized, in that the claw-type retaining elements (4) consist of cylindrical retaining bodies.

9. Insulating bearer in accordance with claim 7, thereby characterized, in that the larger cross-section (2311) of the keyhole-type apertures (231) in the face of the upper foot component (2) is let into the semicircular mounts (8) progressively.

## Revendications

1. Support isolant de rail conducteur utilisé dans des systèmes de circulation, comportant un élément de pied porteur et une zone disposée à sa partie supérieure libre destinée à recevoir le pied du rail conducteur, caractérisé par le fait que l'élément de pied porteur (1) est constitué d'une partie inférieure du pied creuse et d'une partie supérieure du pied (2) qui peut y coulisser de manière télescopique et qu'à l'extrémité de la partie libre de la partie supérieure du pied (2) sont disposés des pattes de réception (4) qui, sous l'effet de la pression d'appui du rail conducteur (5) utilisé, parviennent d'une position de chargement ouverte à une position de maintien enserrant le pied (51) du rail conducteur (5).

2. Support isolant selon la revendication 1, caractérisé par le fait qu'à partir des zones de parois (11) de la partie inférieure du pied (1), des épaulements opposés en forme de nervure (111) pénètrent dans l'espace intérieur creux (12) et prennent dans des rainures de réception longitudinales prévues dans les zones correspondantes de la paroi extérieure (21) de la partie supérieure du pied (2).

3. Support isolant selon les revendications 1 et 2, caractérisé par le fait que la partie supérieure du pied (2) est réglable en hauteur dans la partie inférieure du pied (1) à l'aide d'éléments d'écartement préfabriqués (3).

4. Support isolant selon la revendication 1, caractérisé par le fait que l'extrémité libre de la partie supérieure du pied (2) est constituée de deux zones de parois (23, 24) inclinées convergentes, qui sont supportées en outre par une paroi médiane (25) de la partie supérieure du pied (2) dans leur zone de contact et qui présentent des trous débouchants médians (231) en forme de trous de serrures destinés à recevoir les épaulements (41, 42) en forme de champignons des pattes de réception (4).

5. Support isolant selon la revendication 1, caractérisé par le fait que les pattes de réception (4) sont des pièces moulées recouvrant l'extrémité libre de la partie supérieure du pied (2) et que ces piéces moulées présentent des rainures de guidage dans leur face inférieure plane dans lesquelles prennent des étriers de guidage (7) élastiques en saillie par dessus les zones de parois (23, 24) de l'extrémité libre de la partie supérieure du pied (2).

6. Support isolant selon la revendication 4, caractérisé par le fait que la forme de la plus grande section (2311) des ouvertures en forme de trous de serrures (231) épouse les bords supérieurs des zones de parois (23, 24) inclinées et convergentes.

7. Support isolant selon la revendication 1, caractérisé par le fait que des logements demi-circulaires (8) opposés, ouverts vers le haut, sont creusés dans l'extrémité libre de la partie supérieure du pied (2) et présentent, aux pattes de réception (4), des ouvertures en forme de trous de serrures (231), dirigées vers l'espace intérieur creux (25) de la partie supérieure du pied (2) et destinées à recevoir des épaulements en forme de champignons (41, 42).

8. Support isolant selon la revendication 7, caractérisé par le fait que les pattes de réception (4) sont des pièces de maintien cylindiques.

9. Support isolant selon la revendication 7, caractérisé par le fait que la plus grande section (2311) des ouvertures en forme de trous de serrures (231) est creusée dans les logements semi-circulaires (8) de la face avant de la partie supérieure du pied (2).
